# EUROPÄISCHE PATENTSCHRIFT

(11) **EP 0 786 367 B1**
(45) Veröffentlichungstag und Bekanntmachung des Hinweises auf die Patenterteilung: **05.04.2000**
(21) Anmeldenummer: 96118742.4
(22) Anmeldetag: 22.11.1996
(51) Int. Cl.: B60K 11/08

(54) **Kraftfahrzeug mit einer bugseitigen Kühleranordnung**
Vehicle with front side cooler arrangement
Véhicule avec aménagement de refroidisseur dans la partie avant

(30) Priorität: 23.01.1996 DE 19602186
(43) Veröffentlichungstag der Anmeldung: 30.07.1997
(73) Patentinhaber: Dr.Ing.h.c. F. Porsche Aktiengesellschaft, 70435 Stuttgart (DE)
(72) Erfinder: Würfel, Manfred, 71229 Leonberg (DE)

(56) Entgegenhaltungen:
- EP-A- 0 134 765
- DE-A- 3 701 736
- DE-A- 19 527 442
- GB-A- 1 144 429
- US-A- 4 653 788
- PATENT ABSTRACTS OF JAPAN vol. 017, no. 580 (M-1500), 21. Oktober 1993 & JP 05 170039 A (MAZDA MOTOR CORP), 9. Juli 1993

## Beschreibung

Die Erfindung bezieht sich auf ein Kraftfahrzeug mit einer bugseitigen Kühleranordnung gemäß dem Oberbegriff des Patentanspruchs 1.

Aus der DE 33 38 466 A1 geht eine bugseitige Kühleranordnung für ein Kraftfahrzeug hervor, wobei zwischen den beiden seitlich außenliegenden Längsträgern zwei übereinanderliegende Kühler angeordnet sind, die jeweils über ein separates Luftführungsgehäuse an eine Luftzuführungsöffnung eines den Fahrzeugendbereich bildenden elastischen Verkleidungsteils angeschlossen sind. Das untenliegende Luftführungsgehäuse ist an seinen beiden Enden über schraubbare Befestigungsmittel einerseits mit dem Kühler und andererseits mit dem Verkleidungsteil fest verbunden.

Das oben liegende Luftführungsgehäuse ist mit seinem einen Ende fest mit dem Kühler verbunden, wogegen das andere Ende in den Hohlraum eines Stoßfängerträgers hineinragt. Beide Luftführungsgehäuse sind aus einem einheitlichen formbeständigen Kunststoff hergestellt. Bei einem Aufprallstoß auf den Stoßfänger bewegen sich das elastische Verkleidungsteil und der Stoßfängerträger um einen bestimmten Weg nach hinten in Richtung Kühler und kehren danach ohne Beschädigung des Verkleidungsteiles wieder in ihre ursprüngliche Lage zurück.

Bei dieser Anordnung besteht jedoch die Gefahr, daß das aus relativ hartem formsteifen Kunststoff gebildete Luftführungsgehäuse die Relativbewegung zwischen Stoßfänger und Aufbau nicht mitmacht und daß das Luftführungsgehäuse bei der Relativbewegung beschädigt wird.

Aufgabe der Erfindung ist es, ein Luftführungsgehäuse für eine bugseitige Kühleranordnung so weiterzuentwickeln, daß es bei guter Kühlluftführung und einfacher Montage die bei einem Aufprallstoß auf das Verkleidungsteil auftretende Relativbewegung beschädigungslos aufnehmen kann.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die lediglich feste Anbindung des Luftführungsgehäuse an den Kühler sowie den losen Schiebesitz zwischen Luftführungsgehäuse und Verkleidungsteil eine schnelle, einfache Montage erzielt wird und daß durch die zumindest abschnittsweise elastisch verformbare Ausbildung des Luftführungsgehäuse Relativbewegungen zwischen Stoßfänger und Aufbau ausgeglichen werden, ohne das Luftführungsgehäuse zu beschädigen.

Vorzugsweise ist der dem Verkleidungsteil zugekehrte Teilbereich des in Zwei-Komponentenbauweise gefertigten Kunststoff-Luftführungsgehäuses aus elastisch verformbarem Kunststoff ausgebildet, wogegen der dem Kühler zugewandte Teilbereich aus formbeständigem Kunststoff hergestellt ist.

Bei einem Aufprallstoß bis etwa 8 km/h auf den vorderen Stoßfänger schiebt sich dieser um etwa 80 bis 120 mm nach hinten und der weiche Abschnitt des Luftführungsgehäuses gleicht unter Bildung einer Falte die Relativbewegung aus, wobei sich die Falte beim Zurückführen des Stoßfängers in seine ursprüngliche Position wieder zurückbildet. Dadurch werden keine oder nur sehr geringe Kräfte auf den Kühler übertragen.

Ein Ausführungsbeispiel der Erfindung ist in den Zeichnungen dargestellt und wird im folgenden näher beschrieben.

Es zeigen
- Fig. 1: eine perspektivische Teilansicht von schräg vorne auf einen Bugbereich eines Kraftfahrzeuges mit einer Kühleranordnung,
- Fig. 2: eine Ansicht in Pfeilrichtung R der Fig. 1,

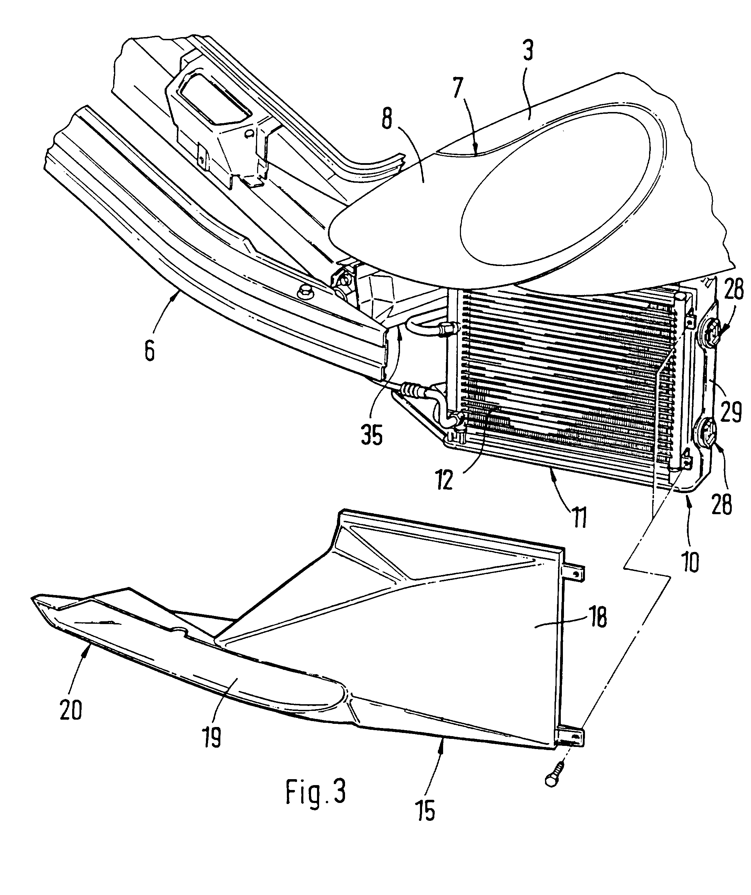

- Fig. 3: eine Ansicht in Pfeilrichtung S der Fig. 1,

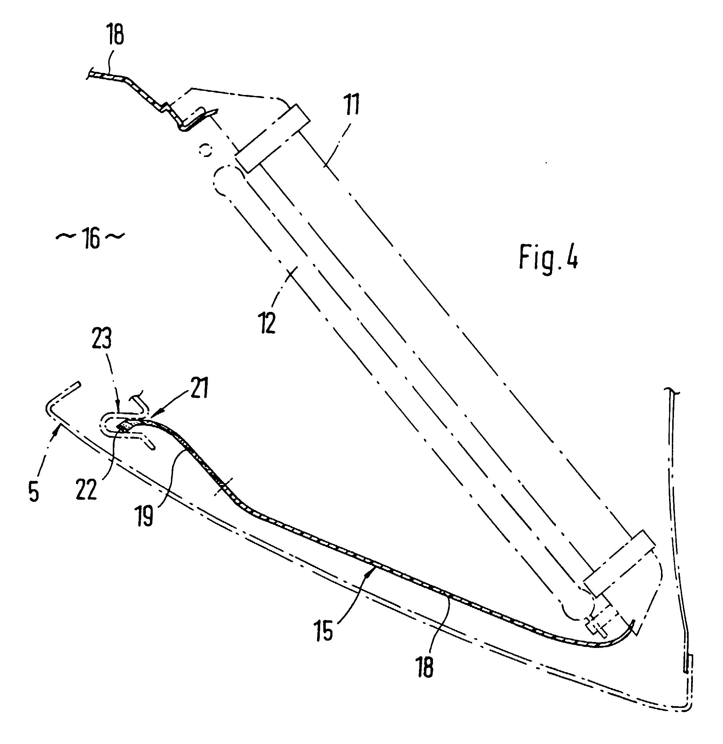

- Fig. 4: einen Schnitt nach der Linie IV-IV der Fig. 1 in größerem Maßstab,
- Fig. 5: einen Schnitt nach der Linie V-V der Fig. 1 in größerem Maßstab,

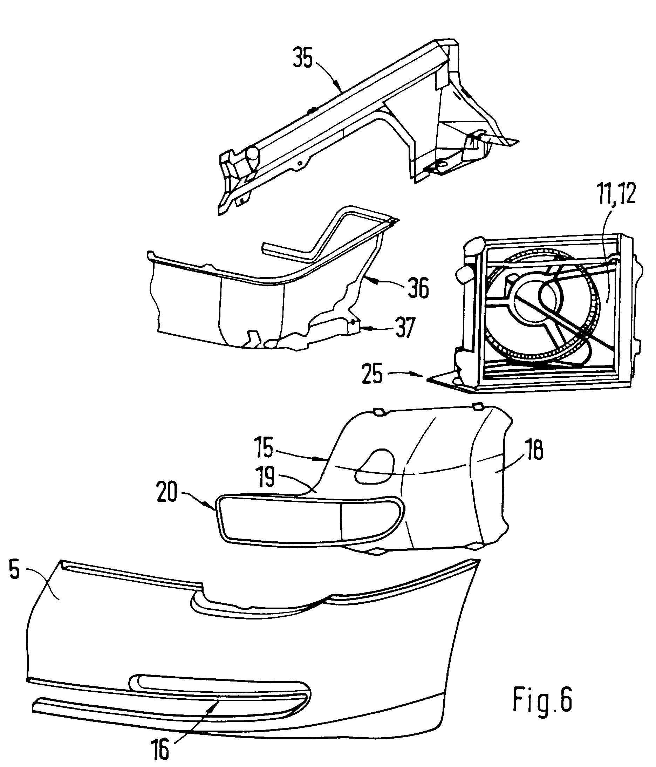

- Fig. 6: die Bauteile der Kühleranordnung und des angrenzenden Aufbaus in Explosionsdarstellung,
- Fig. 7: einen Schnitt durch die Befestigung der vorgefertigten Baueinheit Kühler-Tragkonsole am vorderen Längsträger,
- Fig. 8: einen Schnitt durch die Befestigung der Tragkonsole am Träger der Reserveradmulde in größerem Maßstab,
- Fig. 9: einen Schnitt durch die Befestigung der Tragkonsole am Längsträger in größerem Maßstab.

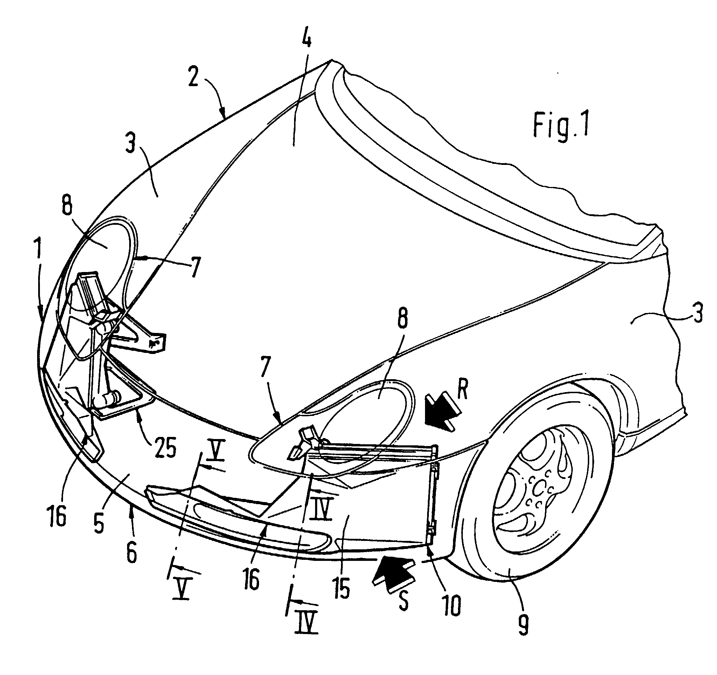

Der in Fig. 1 dargestellte Bugbereich 1 eines durch einen Personenkraftwagen gebildeten Kraftfahrzeuges umfaßt einen Aufbau 2, der sich im wesentlichen aus zwei seitlich außenliegenden Kotflügeln 3, einer dazwischenliegenden schwenkbaren vorderen Haube 4 und einem den Endbereich des Personenwagens bildenden elastischen Verkleidungsteil 5 zusammensetzt. Das Verkleidungsteil 5 bildet zusammen mit einem dahinterliegenden aufbauseitig abgestützten, nicht näher dargestellten Träger einen vorderen Stoßfänger 6. In Ausnehmungen 7 der Kotflügel 3 sind Scheinwerfereinheiten 8 eingesetzt. Das vorzugsweise aus elastischem Kunststoff gefertigte Verkleidungsteil 5 ist seitlich bis an die angrenzenden Vorderräder 9 herangeführt.

Vor jedem Vorderrad 9 ist eine Kühleranordnung 10 vorgesehen, die sich aus zumindest einem Kühler 11, 12, einem von einer Zarge 13 getragenen Lüfter 14 und einem Luftführungsgehäuse 15 zusammensetzt. Der stehend angeordnete Kühler 11 verläuft in der Draufsicht gesehen schräg von vorne innen nach hinten außen.

Die den Lüfter 14 aufnehmende Zarge 13 ist fest mit der Rückseite des Kühlers 11 verbunden. Der Kühler 11 dient im Ausführungsbeispiel zur Kühlung einer nicht näher dargestellten Brennkraftmaschine. Dem Kühler 11 kann ein weiterer Kühler 12 vorgeschaltet sein, der beispielsweise durch einen Klimakondensator gebildet wird.

Der Kühler 12 weist eine geringere Höhenerstreckung auf als der dahinterliegende Kühler 11. Zur definierten Zuführung von Kühlluft ist ein großvolumiges, kanalförmiges Luftführungsgehäuse 15 vorgesehen, das sich zwischen den Luftzuführungsöffnungen 16 des Verkleidungsteiles 5 und dem Kühler 11, 12 erstreckt.

Das aus Kunststoff gefertigte Luftführungsgehäuse 15 ist mittels Befestigungsschrauben 45 lösbar mit dem Kühler 11 verbunden. Das Luftführungsgehäuse 15 ist in Zwei-Komponentenbauweise ausgebildet, dergestalt, daß der dem Kühler 11 zugekehrte Abschnitt 18 aus relativ hartem Kunststoff besteht (z.B. PPT 40), wogegen der dem Verkleidungsteil 5 zugewandte Bereich 19 aus relativ weichen elastischen verformbaren Kunststoff besteht (z.B. PTE).

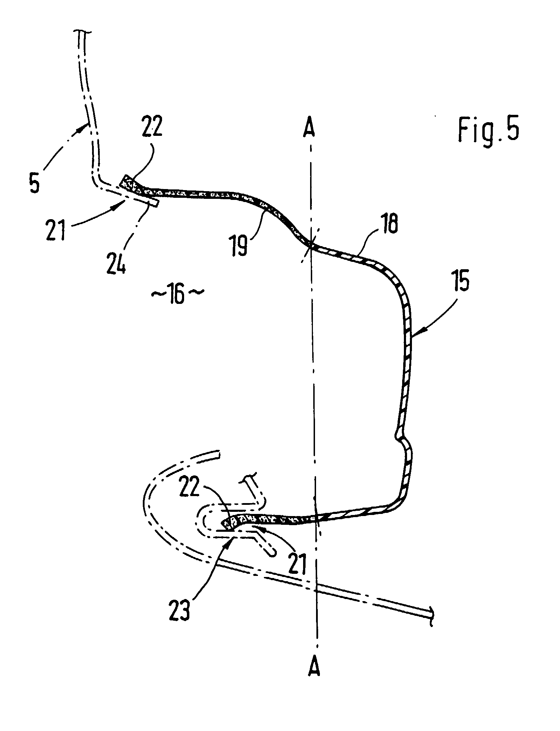

Die Trennung hart/weich verläuft gemäß Fig. 5 im Bereich einer aufrechten Ebene A-A.

Der dem Verkleidungsteil 5 zugekehrte ringförmige Randabschnitt 20 des Luftführungsgehäuses 15 liegt tiefer als der Stoßfängerträger und ist lediglich über einen losen Schiebesitz 21 mit dem Verkleidungsteil 5 verbunden.

In einem Teilbereich des Umfangs der Luftzuführungsöffnung 16 wird der Schiebesitz 21 dadurch gebildet, daß ein freies Ende 22 des Luftzuführungsgehäuses 15 in einen U-förmigen Aufnahmeabschnitt 23 des Verkleidungsteils 5 eingreift (Fig. 5). Der Aufnahmeabschnitt 23 weist zum Toleranzausgleich in Längsrichtung eine größere Längserstreckung auf als der eingesteckte Randabschnitt 20.

In einem anderen Teilbereich des Umfangs der Luftzuführungsöffnung 16 liegt das freie Ende 22 des Luftzuführungsgehäuses 15 unter Vorspannung an der Außenseite eines randseitigen Flansches 24 der Luftzuführungsöffnung 16 auf (Fig. 5).

Durch die Hart-/Weich-Ausbildung des Luftzuführungsgehäuses 15 werden bei einem Aufprallstoß bis etwa 8 km/h auf das Verkleidungsteil 5 nur sehr geringe Kräfte auf den Kühler 11 übertragen und Relativbewegungen des Verkleidungsteiles 5 bzw. des Luftführungsgehäuses 15 können kompensiert werden, ohne daß das Luftführungsgehäuse 15 beschädigt wird.

Ferner lassen sich durch den losen Schiebesitz 21 zwischen Verkleidungsteil 5 und Luftführungsgehäuse 15 relativ große Toleranzen ausgleichen.

Zur einfachen Montage der Kühler 11, 12 und dem Lüfter 14 mit Zarge 13 am Aufbau 2 ist eine Tragkonsole 25 vorgesehen, die sich aus einem etwa horizontal verlaufenden Bodenabschnitt 26 und einer aufrechten Seitenwand 27 zusammensetzt.

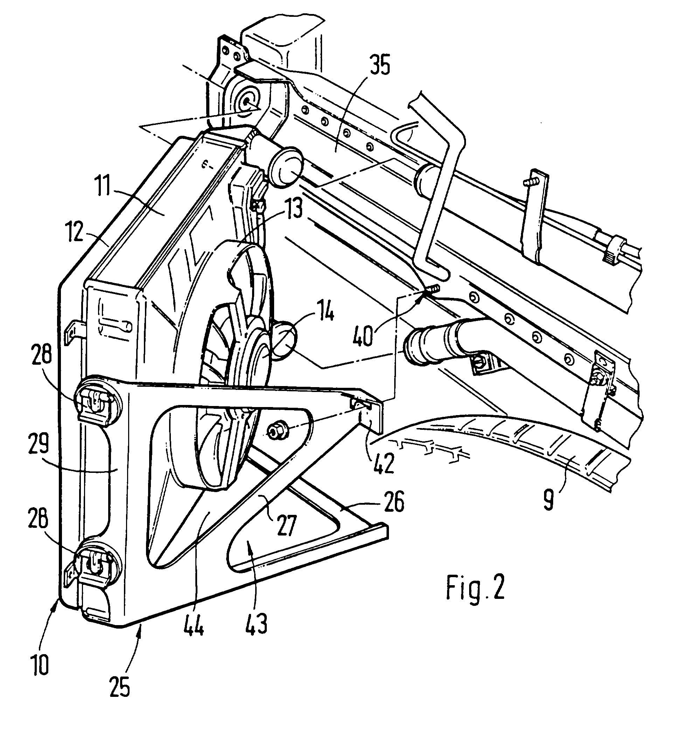

Der Kühler 11 ist über zwei übereinanderliegende elastische Lagerungen 28 an einem abgewinkelten Randbereich 29 der aufrechten Seitenwand 27 der Tragkonsole 25 in Lage gehalten und bildet eine Vormontageeinheit (Fig. 2).

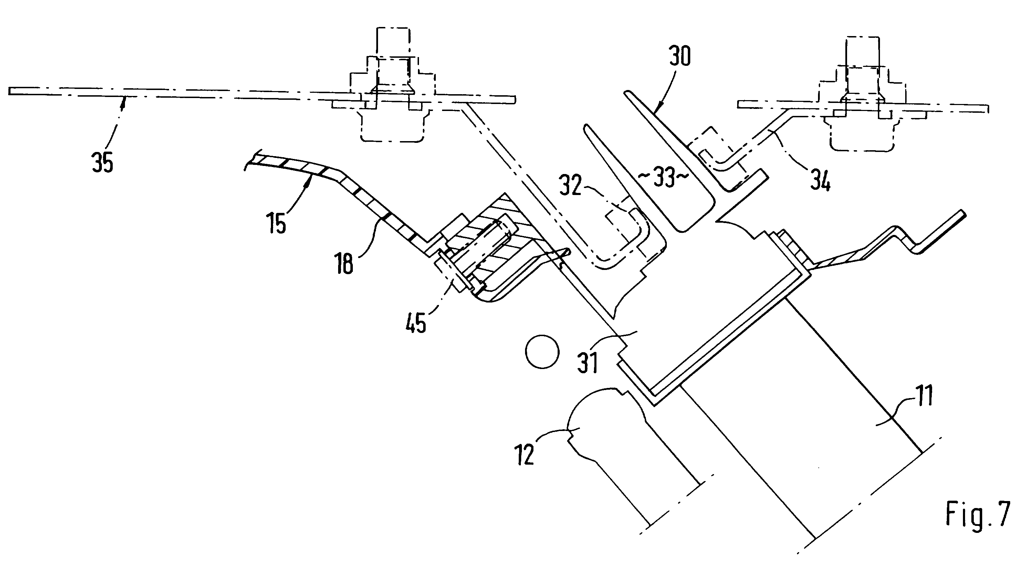

Bei der Montage der Kühleranordnung 10 wird zusätzlich ein angeformter Zapfen 30 des Wasserkastens 31 des Kühlers 11 unter Zwischenschaltung elastischer Mittel 32 in eine Ausnehmung 33 eines aufbauseitigen Halters 34 eingesteckt, so daß bei montierter Kühleranordnung 10 eine Dreipunktlagerung des Kühlers 11 vorhanden ist (Fig. 7).

Die Tragkonsole 25 ist über eine Dreipunktbefestigung am angrenzenden vorderen Längsträger 35 und einer darunterliegenden Reserveradmulde 36 des Aufbaus 2 in Lage gehalten.

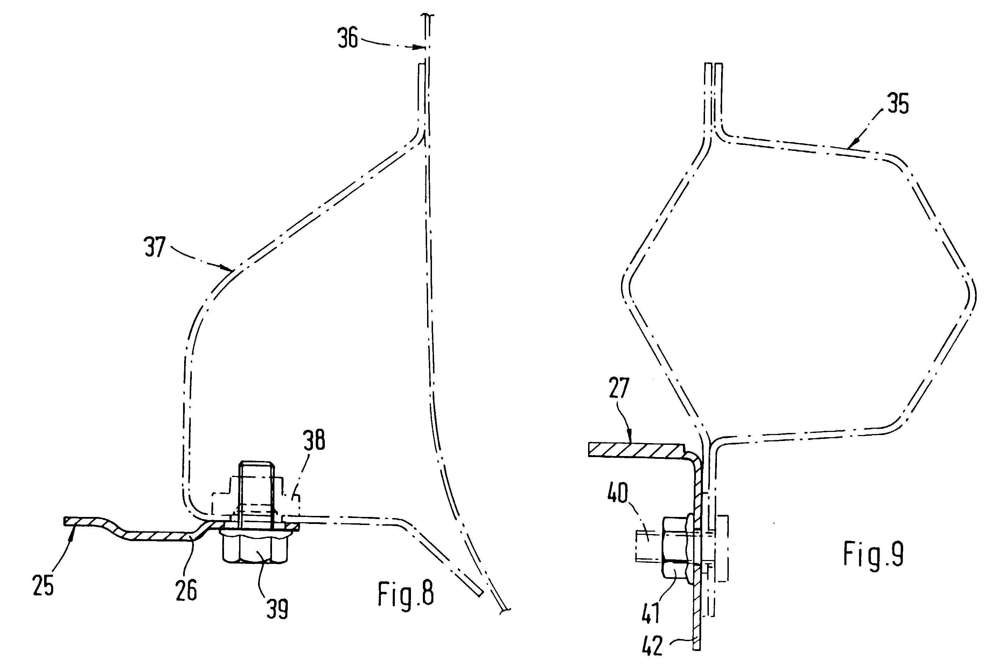

Seitlich außenliegend ist an der Reserveradmulde 36 an sich in Fahrzeuglängsrichtung erstreckendes profiliertes Trägerteil 37 angebracht, an dem zwei beabstandet angeordnete Schweißmuttern 38 vorgesehen sind, wobei in die Schweißmuttern 38 von unten her Befestigungsschrauben 39 zur Halterung der Tragkonsole 25 eingedreht sind (Fig. 8).

Am vorderen Längsträger 35 ist ein querverlaufender, nach außen ragender Gewindebolzen 40 vorgesehen, der durch eine Ausnehmung eines Befestigungswinkels 42 der Seitenwand 27 der Tragkonsole 25 hindurchgeführt ist, wobei auf den Gewindebolzen 40 eine Mutter 41 aufgedreht ist, die den Befestigungswinkel 42 gegen den vorderen Längsträger 35 spannt (Fig. 9).

Der Bodenabschnitt 26 weist angrenzend an den Kühler 11, 12 eine Ausnehmung 43 auf, durch die vom Kühler 11, 12 abströmende Kühlluft nach unten hin zur Fahrbahn abströmen kann. Die fachwerkartie Tragkonsole 25 weist sowohl im Bereich des Bodenabschnitts 26 als auch im Bereich der Seitenwand 27 Versteifungssicken auf (Fig. 2).

Aus Gewichtsgründen ist an der Seitenwand 27 ein mittiger Durchbruch 44 vorgesehen, so daß die Seitenwand 27 annähernd eine Dreiecksform aufweist. Das Luftführungsgehäuse 15 ist im Anschlußbereich an das Verkleidungsteil 5 ringförmig ausgebildet und weist eine relativ große Quererstreckung und eine relativ geringe Höhe auf. Durch den ringförmigen Abschnitt 20 wird die Kühlluft von einem mittleren Bereich des Fahrzeuges nach außen zum seitlich außenliegenden Kühler 11, 12 geleitet.

## Patentansprüche

1. Kraftfahrzeug mit einer bugseitigen Kühleranordnung, wobei zwischen einer stirnseitigen Luftzuführungsöffnung eines den Fahrzeugendbereich bildenden elastischen Verkleidungsteiles und zumindest einem Kühler ein kanalartiges Luftführungsgehäuse angeordnet ist, das an das Verkleidungsteil und den Kühler angeschlossen ist, dadurch gekennzeichnet, daß das fest mit dem Kühler (11, 12) verbundene Luftführungsgehäuse (15) mit dem vorgelagerten Verkleidungsteil (5) lediglich über einen losen Schiebesitz (21) zusammenwirkt und daß das Luftführungsgehäuse (15) bereichsweise aus einem die Verschiebebewegung ausgleichenden, elastisch verformbaren Werkstoff gefertigt ist.

2. Kraftfahrzeug nach Anspruch 1, dadurch gekennzeichnet, daß der dem elastischen Verkleidungsteil (5) zugekehrte Teilbereich (19) des Verkleidungsteiles (15) aus einem elastisch verformbaren Kunststoff hergestellt ist, wogegen der dem Kühler (11, 12) zugekehrte Teilbereich (18) aus einem formbeständigen Kunststoff besteht.

3. Kraftfahrzeug nach Anspruch 1, dadurch gekennzeichnet, daß der Schiebesitz (21) bereichsweise durch einen etwa U-förmig ausgebildeten Aufnahmeabschnitt (23) des Verkleidungsteiles (5) gebildet wird, wobei in den Aufnahmeabschnitt (23) ein freies Ende (22) des Luftführungsgehäuses (15) hineinragt.

4. Kraftfahrzeug nach Anspruch 1, dadurch gekennzeichnet, daß der Schiebesitz (21) bereichsweise durch einen nach hinten ragenden Flansch (24) des Verkleidungsteiles (5) gebildet wird, an dessen Außenseite ein freies Ende (22) des Luftführungsgehäuses (15) unter Vorspannung befestigungslos aufliegt.

5. Kraftfahrzeug nach den Ansprüchen 1 und 2, dadurch gekennzeichnet, daß der dem Kühler (11, 12) zugekehrte Teilbereich (18) des aus zwei unterschiedlichen Komponenten zusammengesetzten Luftführungsgehäuses (15) aus Polypropylen, z.B. PPT 40, besteht, wogegen der dem elastischen Verkleidungsteil (5) zugewandte Teilbereich (19) aus thermoplastischem Elastomere gefertigt ist.

## Claims

1. A motor vehicle with a front radiator arrangement front, wherein a channel-like air-guiding housing is arranged between an air-supply opening - at the front of a resilient panelling part forming the end region of the vehicle - and at least one radiator, the air-guiding housing being attached to the panelling part and the radiator, **characterized in that** the air-guiding housing (15) securely connected to the radiator (11, 12) cooperates merely by way of a loose sliding seat (21) with the panelling part (5) arranged in front, and the air-guiding housing (15) is produced in part from a material compensating the displacement movement and resiliently deformable.

2. A motor vehicle according to Claim 1, **characterized in that** the partial area (19) of the air-guiding housing (15) facing the panelling part (5) is produced from a resiliently deformable plastics material, whereas the partial area (18) facing the radiator (11, 12) consists of a deformation-resistant plastics material.

3. A motor vehicle according to Claim 1, **characterized in that** the sliding seat (21) is formed in part by a substantially U-shaped receiving portion (23) of the panelling part (5), wherein a free end (22) of the air-guiding housing (15) projects into the receiving portion (23).

4. A motor vehicle according to Claim 1, **characterized in that** the sliding seat (21) is formed in part by a flange (24) of the panelling part (5) which projects towards the rear and against the outside of which a free end (22) of the air-guiding housing (15) rests with pre-stressing and without fastening.

5. A motor vehicle according to Claims 1 and 2, **characterized in that** the partial area (18) - facing the radiator (11, 12) - of the air-guiding housing (15) formed from two different components consists of polypropylene, e.g. PPT 40, whereas the partial area (19) facing the resilient panelling part (5) is produced from a thermoplastic elastomer.

## Revendications

1. Véhicule automobile avec un système de refroidissement à l'avant, dans lequel, entre une ouverture d'arrivée d'air frontale d'un élément de revêtement élastique, qui forme la partie terminale du véhicule, et au moins un radiateur, est disposé un boîtier de guidage d'air du type canal, qui est raccordé à l'élément de revêtement et au radiateur, caractérisé en ce que le boîtier de guidage d'air (15), relié fixement au radiateur (11, 12), coopère avec l'élément de revêtement (5) placé devant, uniquement par un ajustement à coulissement libre (21) et en ce que le boîtier de guidage d'air (15) est réalisé dans une matière déformable élastiquement qui compense le mouvement de coulissement.

2. Véhicule automobile selon la revendication 1, caractérisé en ce que la zone partielle (19) du boîtier de guidage d'air (15), tournée vers l'élément de revêtement élastique (5), est fabriquée dans une matière plastique déformable élastiquement, tandis que la zone partielle (18) tournée vers le radiateur (11, 12) est faite d'une matière plastique indéformable.

3. Véhicule automobile selon la revendication 1, caractérisé en ce que l'ajustement à coulissement (21) est constitué par endroits par un logement (23) en U de l'élément de revêtement (5), une extrémité libre (22) du boîtier de guidage d'air (15) pénétrant dans ce logement (23).

4. Véhicule automobile selon la revendication 1, caractérisé en ce que l'ajustement à coulissement (21) est constitué par endroits par une bride (24) dépassant vers l'arrière de l'élément de revêtement (5), sur le côté extérieur duquel repose une extrémité libre (22) du boîtier de guidage d'air (15), sous précontrainte et sans fixation.

5. Véhicule automobile selon les revendications 1 et 2, caractérisé en ce que la zone partielle (18), tournée vers le radiateur (11, 12), du boîtier de guidage d'air (15) constitué de deux composants différents, est en polypropylène, par exemple en PPT 40, tandis que la zone partielle (19), tournée vers l'élément de revêtement élastique (5), est en élastomère thermoplastique.
